# EUROPÄISCHE PATENTSCHRIFT

(11) **EP 4 129 040 B1**
(45) Veröffentlichungstag und Bekanntmachung des Hinweises auf die Patenterteilung: **23.04.2025**
(21) Anmeldenummer: 22188737.5
(22) Anmeldetag: 04.08.2022
(51) Int. Cl.: A01D 34/00

(54) **TRAGBARE UND/ODER MOBILE SIGNALERZEUGUNGSVORRICHTUNG**
PORTABLE AND / OR MOBILE SIGNAL GENERATING DEVICE
DISPOSITIF PORTABLE ET/OU MOBILE DE GÉNÉRATION DE SIGNAUX

(30) Priorität: 04.08.2021 DE 202021104167 U
(43) Veröffentlichungstag der Anmeldung: 08.02.2023
(73) Patentinhaber: Einhell Germany AG, 94405 Landau / Isar (DE)
(72) Erfinder: Färber, Hermann, 94405 Landau/Isar (DE)
(74) Vertreter: Hofstetter, Schurack & Partner

(56) Entgegenhaltungen:
- WO-A1-2021/130939
- GB-A- 2 577 146
- US-A1- 2015 318 521

## Beschreibung

Die vorliegende Erfindung betrifft eine zwischen ein oder mehreren Bearbeitungsbereichen tragbare und/oder mobile Signalerzeugungsvorrichtung mit den Merkmalen des unabhängigen Anspruchs 1.

Autonom fahrende Bodenbearbeitungsroboter, insbesondere Mähroboter, zur Rasenpflege sind an sich bekannt. Um autonom fahrende Bodenbearbeitungsroboter betreiben zu können, ist in der Regel eine Ladestation und ein Begrenzungselement zur Ausbildung eines Mähbereichs erforderlich. Das Begrenzungselement kann wahlweise auf den Boden gelegt oder im Boden verlegt sein. Die Ladestation und das Begrenzungselement sind elektrisch miteinander verbunden und bilden ein geschlossenes System bzw. eine Leiterschleife. Der Bereich bzw. die Fläche innerhalb dieses Systems stellt den Bearbeitungsbereich für den Bodenbearbeitungsroboter dar. Damit der Bodenbearbeitungsroboter sich innerhalb des Bearbeitungsbereichs orientieren kann, sendet die Ladestation ein definiertes Signal an bzw. durch das Begrenzungselement, welches der Bodenbearbeitungsroboter mittels entsprechender Detektionsmittel und/oder Sensoren erkennen kann und zur Orientierung für den Bodenbearbeitungsroboter dient. Da die Ladestation bekannterweise stationär ausgebildet ist, lässt sich der Bearbeitungsroboter nicht ohne Weiteres in andere Bearbeitungsbereiche umsetzen, was folglich bedeutet, dass der Einsatzbereich des Bodenbearbeitungsroboters räumlich auf einen Bearbeitungsbereich beschränkt ist.

Dokument GB 2 577 146 A zeigt ein System aus einem autonomen Gerät und einem Begrenzungsleiter. Ein Sender, der von einer Batterie versorgt wird, erzeugt entsprechende Sendesignale für den Begrenzungsleiter.

Dokument WO 2021/130939 A1 offenbart eine Ladestation für eine sich autonom bewegende Arbeitsmaschine, die eine Speicherbatterie der Arbeitsmaschine laden kann.

Dokument US 2015/318521 A beschreibt ein wiederaufladbares Batteriesystem zum Ersatz einer Blei-Säure-Batterie.

Der vorliegenden Erfindung liegt daher die Aufgabe zugrunde, eine tragbare und/oder mobile Signalerzeugungsvorrichtung zur Verfügung zu stellen, mittels welcher kostengünstig und ohne großen Aufwand Bearbeitungsbereiche für einen autonom fahrenden Bodenbearbeitungsroboter definiert werden können, so dass der autonom fahrende Bodenbearbeitungsroboter in verschiedenen Bearbeitungsbereichen flexibel eingesetzt und betrieben werden kann.

Die genannte Aufgabe wird gelöst durch den Gegenstand einer tragbaren und/oder mobilen Signalerzeugungsvorrichtung mit den Merkmalen des unabhängigen Anspruchs 1. Weitere vorteilhafte Ausgestaltungen und Weiterbildungen der Erfindung sind in den jeweils abhängigen Ansprüchen angegeben.

Die tragbare und/oder mobile Signalerzeugungsvorrichtung dient zur Kopplung an ein vorgegebenes Begrenzungselement, das einen Bearbeitungsbereich für einen autonom fahrenden Bodenbearbeitungsroboter definiert.

Die Signalerzeugungsvorrichtung umfasst zumindest ein Gehäuse mit zumindest zwei Anschlüssen, an welche jeweils ein Ende des vorgegebenen Begrenzungselements koppelbar ist, so dass bei erfolgter Kopplung insbesondere ein geschlossener Bearbeitungsbereich für den autonom fahrenden Bodenbearbeitungsroboter ausgebildet werden kann, d.h. der Bearbeitungsbereich kann zunächst zumindest einseitig offen ausgebildet sein und über die Signalerzeugungseinheit zu einem geschlossenen Bearbeitungsbereich geschlossen werden.

Die tragbare und/oder mobile Signalerzeugungsvorrichtung umfasst eine im Gehäuse angeordnete und/oder vorgesehene Signalerzeugungseinheit, welche über die zumindest zwei Anschlüssen elektrisch mit dem vorgegebenen Begrenzungselement koppelbar und/oder verbindbar ist und welche dazu ausgebildet ist, ein elektrisches Signal durch das vorgegebene Begrenzungselement zu senden.

Die tragbare und/oder mobile Signalerzeugungsvorrichtung umfasst weiter wenigstens einen Akkupack, welcher die Signalerzeugungseinheit mit elektrischer Energie versorgt, wobei der wenigstens eine Akkupack der tragbaren Vorrichtung lösbar an die Signalerzeugungseinheit angeschlossen ist.

Da bei einem Ausführungsbeispiel der vorliegenden Signalerzeugungsvorrichtung lediglich die Enden des Begrenzungselements eines (damit abgesteckten oder absteckbaren) Bearbeitungsbereichs an der Signalerzeugungsvorrichtung, insbesondere an deren Anschlüsse, gekoppelt werden müssen, kann auf einfache Art und Weise eine elektrische Verbindung zwischen der Signalerzeugungsvorrichtung und dem Begrenzungselement hergestellt werden. Insbesondere kann durch die elektrische Verbindung zwischen der Signalerzeugungsvorrichtung und dem Begrenzungselement ein geschlossener Bearbeitungsbereich bzw. eine Leiterschleife ausgebildet werden. Eine solche Leiterschleife ist erforderlich, um einen Bearbeitungsbereich für einen autonom fahrenden Bodenbearbeitungsroboter bereitzustellen und auszubilden. Da die elektrische Energieversorgung der Signalerzeugungseinheit ausschließlich über den Akkupack erfolgt, kann vorteilhafterweise auf eine separate Ladestation verzichtet werden, wodurch die Anschaffungskosten gesenkt werden können.

Aufgrund der einfach ausgestalteten Koppelung des Begrenzungselements an der Signalerzeugungsvorrichtung ist es daher möglich, die Signalerzeugungsvorrichtung immer mit denjenigen Enden eines jeweiligen Begrenzungselements eines (abgesteckten oder abzusteckenden) Bearbeitungsbereichs zu koppeln, welcher durch den Bodenbearbeitungsroboter bearbeitet werden soll. Somit kann die Signalerzeugungsvorrichtung an lokal unterschiedlich verlegten Begrenzungselementen gekoppelt und zur dortigen Ausbildung eines jeweiligen Bearbeitungsbereichs eingesetzt werden. Infolgedessen kann auch der Bodenbearbeitungsroboter flexibel eingesetzt werden.

Bei den zumindest zwei Anschlüssen kann es sich insbesondere um elektrische Anschlüssen handeln, über welche die Signale der Signalerzeugungseinheit an das Begrenzungselement gesendet werden können.

Die zumindest zwei Anschlüsse können jeweils eine Rast-, Steck- und/oder Klemmaufnahme aufweisen, in welche die Enden des Begrenzungselements möglichst einfach an den Anschlüssen gekoppelt und auch wieder entkoppelt werden können. Insbesondere können die Enden des Begrenzungselements in die zumindest zwei Koppelstellen eingerastet, eingesteckt und/oder eingeklemmt werden. Die Verbindung zwischen den zumindest zwei Koppelstellen und den Enden des Begrenzungselements ist vorzugsweise lösbar ausgebildet, so dass die tragbare und/oder mobile Signalerzeugungsvorrichtung flexibel bei lokal unterschiedlich verlegten Begrenzungselementen eingesetzt werden kann.

Der wenigstens eine Akkupack kann wenigstens ein Akkupackgehäuse umfassen, innerhalb welchem mehrere Akkuzellen angeordnet sind. Bei den Akkuzelle kann es sich insbesondere um Lithium-Ionen-Akkumulatorzellen handeln. Beispielsweise können innerhalb des wenigstens einen Akkupackgehäuses fünf Akkuzellen oder zehn Akkuzellen angeordnet sein. Die mehreren Akkuzellen können untereinander in Reihe und/oder parallel geschalten sein.

Der Akkupack kann eine Nennspannung zwischen ca. 12 Volt und ca. 40 Volt aufweisen. Eine bevorzugte Nennspannung des Akkupacks kann 18 Volt betragen.

Es ist vorgesehen, dass der Akkupack als wechselbarer oder austauschbarer Akkupack ausgestaltet ist. Insbesondere kann der Akkupack als Wechselakkupack bzw. als Systemakkupack ausgebildet sein, was so viel bedeutet, dass der Akkupack neben der elektrischen Energieversorgung der tragbaren und/oder mobilen Energieversorgungsvorrichtung universell zur elektrischen Energieversorgung für verschiedene Elektrogeräte, beispielsweise eines Elektrowerkzeuges, elektrischen Gartengeräts, Haushaltsgeräts, Fahrzeuge oder dergleichen verwendet werden kann.

Das Akkupackgehäuse kann ein- oder mehrteilig ausgebildet sein. Vorzugsweise kann das Akkupackgehäuse zweiteilig, bestehend aus einem Unterteil und einem Oberteil, gebildet sein. Innerhalb des Akkupackgehäuses kann ein Leitungsträger vorgesehen sein, welcher mit der zumindest einen Akkuzelle elektrisch verbunden ist. Der elektrische Leitungsträger ist durch eine Leiterplatine bzw. Platine gebildet. Auf dem elektrischen Leitungsträger sind verschiedene elektronische Bauteile, beispielweise ein Taster, Leistungs-MOSFET etc. montiert. Der Akkupack kann zudem mit einem Batteriemanagement-System ausgestattet sein.

Darüber hinaus ist vorgesehen, dass der Akkupack eine Akkupack-Schnittstelle aufweist. Die Akkupack-Schnittstelle kann einen oder mehrere elektrische Steck- und/oder Klemm- und/oder Rastkontakte oder dergleichen aufweisen. Die ein oder mehreren Steck- und/oder Klemm- und/oder Rastkontakte können durch Tulpenkontakte oder Schwertkontakte gebildet sein.

Weiterhin ist vorgesehen, dass das Gehäuse der Signalerzeugungsvorrichtung eine Akkuaufnahme bzw. weitere Akkupack-Schnittstelle aufweist, die kompatibel zur Akkupack-Schnittstelle des Akkupacks ausgebildet ist, so dass der Akkupack über seine Akkupack-Schnittstelle an Akkuaufnahme elektrisch und mechanisch koppelbar ist.

Gemäß einer alternativen Ausführungsform kann vorgesehen sein, dass die Signalerzeugungsvorrichtung zumindest ein weiteres Gehäuse umfasst. Bei diesem weiteren Gehäuse kann es sich um ein separates Gehäuse handeln, das ebenfalls tragbar und/oder mobil ausgebildet ist.

Das weitere Gehäuse kann mit dem Gehäuse elektrisch verbunden sein. Die elektrische Verbindung zwischen dem Gehäuse und dem weiteren Gehäuse kann durch zumindest eine Leitung oder dergleichen gebildet sein. Insbesondere können an den beiden Gehäusen korrespondierende Koppelstellen oder dergleichen vorgesehen sein, an welche die zumindest eine Leitung lösbar gekoppelt werden kann.

Gemäß der alternativen Ausführungsform kann das weitere Gehäuse eine Akkuaufnahme bzw. weitere Akkupack-Schnittstelle aufweisen, die kompatibel zur Akkupack-Schnittstelle des Akkupacks ausgebildet ist. Der Akkupack kann somit über seine Akkupack-Schnittstelle an der weiteren Akkupack-Schnittstelle des weiteren Gehäuses mechanisch koppelbar sein.

Bei beiden Ausführungsformen kann die weitere Akkupack-Schnittstelle entsprechende Halte- und/oder Kontakt- und/oder Rastelemente, wie beispielsweise Kontaktklemmen oder dergleichen aufweisen.

Insbesondere kann der Akkupack über die Akkupack-Schnittstelle auf die weitere Akkupack-Schnittstelle des Gehäuses oder des weiteren Gehäuses aufgeschoben werden und/oder gesteckt werden und/oder verrastet werden. Aufgrund derartiger Koppelung kann die Verbindung zwischen Akkupack und Akkupack-Schnittstelle jederzeit wieder gelöst werden. Das Lösen des Akkupacks von der weiteren Akkupack-Schnittstelle des Gehäuses oder des weiteren Gehäuses kann beispielsweise dann erforderlich sein, wenn der Akkupack entladen ist und zum Laden an einem Ladegerät angeschlossen werden soll.

Darüber hinaus kann durch die mechanische Koppelung des Akkupacks an der weiteren Akkupack-Schnittstelle des Gehäuses oder des weiteren Gehäuses eine elektrische Verbindung ausgebildet werden. Die Signalerzeugungseinheit kann über entsprechende ein oder mehrere Leitungen mit der weiteren Akkupack-Schnittstelle des Gehäuses elektrisch verbunden sein. Aufgrund der ausgebildeten elektrischen Verbindung kann insbesondere die Signalerzeugungseinheit mit elektrischer Energie, insbesondere mit Strom, versorgt werden, welche wiederrum ein Signal zur Kennzeichnung eines Bearbeitungsbereichs durch das Begrenzungselement senden kann.

Gemäß einer Ausführungsform kann das Gehäuse oder das weitere Gehäuse ein öffenbares Gehäuseelement bzw. ein Gehäusefach aufweisen, innerhalb welchem die Akkuaufnahme bzw. weitere Akkupack-Schnittstelle zum Schutz vor äußeren Umwelteinflüssen angeordnet ist. Das öffenbare Gehäusefach kann beispielsweise mit einer Klappe, einem Deckel oder dergleichen ausgestattet sein. Insbesondere kann der Akkupack dadurch vor Feuchtigkeit und Nässe sowie vor Staub- und/oder Schmutzpartikel geschützt werden.

Die Akkuaufnahme für den Akkupack ist an einer Außenseite des Gehäuses oder des weiteren Gehäuses angeordnet.

Dem Gehäuse und/oder dem weiteren Gehäuse kann ein Ein-/Aus-Bedieneinheit zugeordnet sein, über welche die Signalerzeugungsvorrichtung aktiviert oder deaktiviert werden kann. Insbesondere kann durch die Ein-/Aus-Bedieneinheit somit auch die elektrische Energieversorgung durch das Akkupack zu- oder abgeschaltet werden. Die Ein-/Aus-Bedieneinheit kann durch einen Schalter, Taster, Touchdisplay oder dergleichen gebildet sein.

Darüber hinaus kann vorgesehen sein, dass die Signalerzeugungseinheit ein elektrisches Signal an bzw. durch das Begrenzungselement sendet, welches durch ein Pulssignal, durch ein Sinussignal, durch Rechtecksignal, durch Dreiecksignal, durch ein Sägezahnsignal oder durch ein sonstiges moduliertes Signal gebildet ist.

Weiterhin kann vorgesehen sein, dass die Signalerzeugungseinheit durch einen Frequenzgenerator gebildet ist, der ein Wechselsignal mit einer Frequenz zwischen ca. 1 Hz und ca. 100 Hz, vorzugsweise zwischen ca. 40 Hz und ca. 90 Hz, an bzw. durch das Begrenzungselement sendet. Die genannte Frequenz soll jedoch nicht einschränkend zu verstehen sein, denn der Frequenzgenerator kann auch eine Frequenz an das Begrenzungselement senden, die im Kilo- oder Mega-Hertz-Bereich oder dergleichen liegt.

Bei dem Bodenbearbeitungsroboter kann es sich insbesondere um einen Mähroboter handeln, welcher innerhalb des Begrenzungsbereichs bzw. Mähbereichs den Rasen schneidet. Der Bodenbearbeitungsroboter kann zudem auch als ein solcher autonomer Roboter ausgebildet sein, welcher innerhalb des Bearbeitungsbereichs Wasser und/oder Dünger auf den Rasen ausbringt, Laub sammelt oder dergleichen.

Das Begrenzungselement kann vorzugsweise durch einen Begrenzungsdraht oder dergleichen gebildet sein. Üblicherweise kann der Begrenzungsdraht aus Kupfer, Aluminium oder durch diverse Metalllegierungen gebildet sein, welches von einem isolierenden Material, wie beispielsweise PVC, umgeben ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt in einer schematischen Ansicht eine Ausführungsform der mobilen und/oder tragbaren Signalerzeugungsvorrichtung, welche an ein Begrenzungselement eines Bearbeitungsbereichs gekoppelt ist.

Fig. 2 zeigt in einer schematischen Ansicht eine weitere Ausführungsform der mobilen und/oder tragbaren Signalerzeugungsvorrichtung, welche an ein anderes Begrenzungselement eines anderen Bearbeitungsbereichs gekoppelt ist.

Für gleiche oder gleichwirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und sie stellen keine Einschränkungen dar.

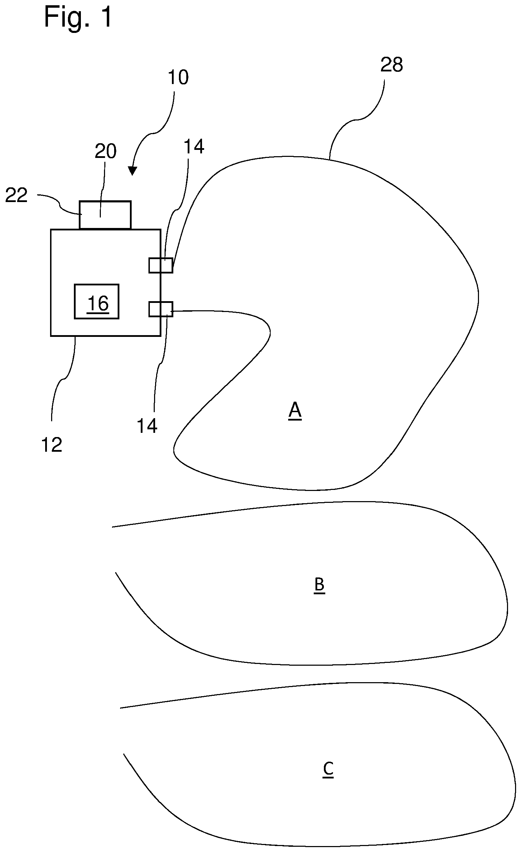

In der Figur 1 sind schematisch drei räumlich getrennte Bearbeitungsbereiche A, B und C dargestellt, welche jeweils durch ein Begrenzungselement 28 räumlich begrenzt sind. Bei dem Begrenzungselement 28 kann es sich insbesondere um einen Begrenzungsdraht handeln. Bei den Bearbeitungsbereichen A, B und C handelt es sich insbesondere um Mähbereiche, innerhalb welcher bei Bedarf ein hier nicht dargestellter Bodenbearbeitungsroboter, insbesondere ein Mähroboter, den Rasen auf eine bestimmte Höhe schneiden kann.

Während die in Figur 1 gezeigten Mähbereiche B und C einseitig offen ausgebildet sind, wurden zwischen den beiden Enden des Begrenzungselements 28 des Mähbereichs A eine Signalerzeugungsvorrichtung 10 zwischengeschaltet. Durch die Signalerzeugungsvorrichtung 10 wird der einseitig offene Bearbeitungsbereich zu einem geschlossenen Bearbeitungsbereich A bzw. zu einer Leiterschleife geschlossen.

Die Signalerzeugungsvorrichtung 10 umfasst ein Gehäuse 12, welches eine beliebige Form aufweisen kann. Das Gehäuse 12 ist mit zumindest zwei Anschlüssen 14 ausgestattet. Bei diesen Anschlüssen 14 handelt es sich insbesondere um elektrische Anschlüsse, an welche jeweils ein Ende des Begrenzungselements 28 des Mähbereichs A gekoppelt ist.

Die zumindest zwei Anschlüsse 14 können jeweils eine Rast-, Steck- und/oder Klemmaufnahme aufweisen, so dass die Enden des Begrenzungselements 28 an den Anschlüssen 14 eingerastet, eingesteckt und/oder eingeklemmt werden können. Eine solche Verbindung ermöglicht ein einfaches Koppeln und Entkoppeln der Enden des Begrenzungselements 28, so dass die Signalerzeugungsvorrichtung 10 jederzeit vom Mähbereich A entkoppelt und bei Bedarf an einem anderen Mähbereich B, C eingesetzt werden kann, indem jeweils die Enden des jeweiligen Begrenzungselements 28 des jeweiligen Mähbereichs B, C an der Signalerzeugungsvorrichtung 10 angeschlossen werden. Durch die Signalerzeugungsvorrichtung 10 kann somit beim Mähbereich B oder Mähbereich C ein geschlossener Bearbeitungsbereich bzw. Leiterschleife gebildet werden, die zum Betreiben des Bodenbearbeitungsroboters innerhalb dieses Bearbeitungsbereichs erforderlich ist.

Innerhalb des Gehäuses 12 ist eine Signalerzeugungseinheit 16 vorgesehen, welche über die zumindest zwei Anschlüsse 14 elektrisch mit dem Begrenzungselement 28 gekoppelt und/oder verbunden werden kann und welche dazu ausgebildet ist, ein Signal durch das Begrenzungselement 28 zu senden.

Die Signalerzeugungseinheit 16 kann insbesondere durch einen Frequenzgenerator aufweisen. Der Frequenzgenerator ist dazu ausgebildet, ein Wechselsignal mit einer Frequenz zwischen ca. 1 Hz und ca. 100 Hz, vorzugsweise zwischen ca. 40 Hz und ca. 90 Hz durch das Begrenzungselement 28 zu senden. Das durch das Begrenzungselement 28 gesendete Wechselsignal bewirkt auf Grund der Antennenwirkung des Begrenzungselements 28 ein elektromagnetisches Signal, anhand welchem sich der Bearbeitungsroboter innerhalb des Bearbeitungsbereichs A orientieren kann, d.h. je stärker das elektromagnetische Signal ist, desto näher befindet sich der Bearbeitungsroboter am Begrenzungselement 28. Zur Detektion und/oder Erkennung der vorherrschenden Frequenz ist der Bearbeitungsroboter mit entsprechenden Detektionsmitteln und/oder Sensoren ausgestattet.

Die elektrische Energieversorgung der Signalerzeugungseinheit 16, insbesondere des Frequenzgenerators, erfolgt durch einen Akkupack 20. Der Akkupack 20 ist der Signalerzeugungsvorrichtung 10 lösbar zugeordnet bzw. dort lösbar angesteckt. Der Akkupack 20 kann z.B. eine Nennspannung zwischen ca. 12 Volt und ca. 40 Volt aufweisen. Eine bevorzugte Nennspannung des Akkupacks beträgt 18 Volt.

In der vorliegenden Figur 1 ist der Akkupack 20 insbesondere dem Gehäuse 12 der Signalerzeugungsvorrichtung 10 lösbar zugeordnet. Beispielsweise besitzt das Gehäuse 12 einen oder mehrere Steckplätze für Akkupacks 20. Der Akkupack 20 weist ein Akkupackgehäuse 22 auf, innerhalb welchem wenigstens eine Akkuzelle angeordnet ist. Bei der wenigstens einen Akkuzelle handelt es sich vorzugsweise um eine Lithium-Ionenzelle, d.h. bei dem Akkupack 20 handelt es sich um einen Lithium-Ionen-Akkupack. Der Akkupack 20 kann auch mehr als eine Akkuzelle aufweisen, beispielsweise fünf oder zehn Akkuzellen, welcher untereinander parallel und/oder in Reihe geschalten sein können.

Der Akkupack 20 weist eine hier nicht dargestellte Akkupack-Schnittstelle auf, welche durch ein oder mehrere elektrische Steck- und/oder Klemm- und/oder Rastkontakte oder dergleichen gebildet ist. Insbesondere sind die ein oder mehreren elektrischen Steck- und/oder Klemm- und/oder Rastkontakte durch Tulpenkontakte oder Schwertkontakte gebildet.

Das Gehäuse 12 der Signalerzeugungsvorrichtung 10 umfasst eine weitere Akkupack-Schnittstelle (ebenfalls nicht dargestellt, auch Akkuaufnahme genannt), die kompatibel zur Akkupack-Schnittstelle des Akkupacks 20 ist. Dementsprechend weist die weitere Akkupack-Schnittstelle Halte- und/oder Kontakteelemente, Kontaktklemmen oder dergleichen auf. Der Akkupack 20 ist somit über eine Akkupack-Schnittstelle an der Akkuaufnahme (weiteren Akkupack-Schnittstelle) des Gehäuses 12 mechanisch und elektrisch koppelbar und bei Bedarf wieder entkoppelbar. Die elektrische Verbindung zwischen der Akkuaufnahme und der Signalerzeugungseinheit 16 erfolgt durch hier nicht dargestellte elektrische Leitungen oder dergleichen.

Bei dem Akkupack 20 handelt es sich insbesondere um einen wechselbaren oder austauschbaren Akkupack 20 bzw. um einen Wechselakkupack bzw. Systemakkupack Dies bedeutet, dass der Akkupack 20 neben der elektrischen Energieversorgung der tragbaren und/oder mobilen Signalerzeugungsvorrichtung 10 universell zur elektrischen Energieversorgung für verschiedene Elektrogeräte, beispielsweise Elektrowerkzeuge, elektrischen Gartengeräte, Haushaltsgeräte, Fahrzeuge oder dergleichen verwendet werden kann.

Dem Gehäuse 12 ist eine entsprechende Ein-/Aus-Bedieneinheit (hier nicht dargestellt) zugeordnet, über welche die Signalerzeugungsvorrichtung 10 aktiviert bzw. deaktiviert werden kann. Insbesondere kann über die Ein-Aus-Bedieneinheit die elektrische Energieversorgung durch den Akkupack 20 gesteuert werden. Die Ein-Aus-Bedieneinheit kann durch einen Schalter, Taster, Touchdisplay oder dergleichen gebildet sein.

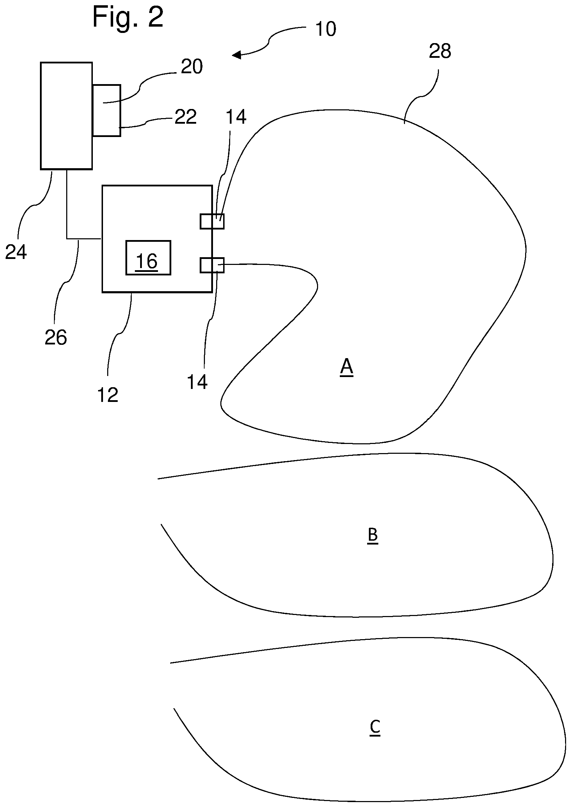

In der Figur 2 ist eine weitere Ausführungsform der Signalerzeugungsvorrichtung 10 schematisch dargestellt, die zwischen den zwei Enden des Begrenzungselements 28 des Mähbereichs A zwischengeschaltet ist.

Die Signalerzeugungsvorrichtung 10 umfasst ein Gehäuse 12, welches eine beliebige Form aufweisen kann. Das Gehäuse 12 ist mit zumindest zwei Anschlüssen 14 ausgestattet. Bei diesen Anschlüssen 14 handelt es sich insbesondere um elektrische Anschlüsse. An diese Anschlüsse 14 ist jeweils ein Ende des Begrenzungselements 28 des Mähbereichs A gekoppelt.

Die zumindest zwei Anschlüsse 14 können jeweils eine Rast-, Steck- und/oder Klemmaufnahme aufweisen, so dass die Enden des Begrenzungselements 28 an den Anschlüssen 14 eingerastet, eingesteckt und/oder eingeklemmt werden können. Eine solche Verbindung ermöglicht ein einfaches Koppeln und Entkoppeln der Enden des Begrenzungselements 28. Auf diese Weise kann die Signalerzeugungsvorrichtung 10 jederzeitig an einem anderen Mähbereich **B,** C bzw. einem anderen Begrenzungselement 28 eingesetzt werden, indem jeweils die Enden des Begrenzungselements 28 des jeweiligen Mähbereichs **B,** C an der Signalerzeugungsvorrichtung 10 angeschlossen werden. Dadurch wird ein geschlossenes System bzw. Leiterschleife ausgebildet, die zum Betreiben eines Bearbeitungsroboters innerhalb dieses Mähbereichs zwingend erforderlich ist.

Innerhalb des Gehäuses 12 ist eine Signalerzeugungseinheit 16 vorgesehen, welche über die zumindest zwei Anschlüsse 14 elektrisch mit dem Begrenzungselement 28 gekoppelt und/oder verbunden ist und welche dazu ausgebildet ist, ein Signal durch das Begrenzungselement 28 zu senden.

Die Signalerzeugungseinheit 16 weist insbesondere einen Frequenzgenerator (vgl. auch Ausführungen zur Figur 1) auf. Der Frequenzgenerator 18 ist dazu ausgebildet, ein Wechselsignal durch das Begrenzungselement 28 zu senden. Das durch das Begrenzungselement 28 gesendete Wechselsignal bewirkt auf Grund der Antennenwirkung des Begrenzungselements 28 ein elektromagnetisches Signal, anhand welchem sich der Bearbeitungsroboter innerhalb des Bearbeitungsbereichs A orientieren kann, d.h. je stärker das elektromagnetische Signal ist, desto näher befindet sich der Bearbeitungsroboter am Begrenzungselement 28. Der Bearbeitungsroboter ist mit entsprechenden Detektionsmitteln und/oder Sensoren ausgestattet, um das entsprechende elektromagnetische Signal detektieren und/oder erfassen zu können.

Die Signalerzeugungsvorrichtung 10 umfasst zudem ein weiteres Gehäuse 24, welches mit dem Gehäuse 12 elektrisch verbunden und/oder gekoppelt ist. Die elektrische Verbindung zwischen den beiden Gehäusen 12, 24 ist durch wenigstens eine elektrische Leitung 26 gebildet.

Die elektrische Energieversorgung der Signalerzeugungseinheit 16, insbesondere des Frequenzgenerators , erfolgt durch einen Akkupack 20, welcher der Signalerzeugungsvorrichtung 10 indirekt über das weitere Gehäuse 24 lösbar zugeordnet bzw. lösbar daran angesteckt ist. Der Akkupack 20 weist eine hier nicht dargestellte Akkupack-Schnittstelle auf. Weitere Merkmale und Ausgestaltungsformen des Akkupacks entsprechen den in Figur 1 erläuterten Ausführungsformen und sollen hiermit umfasst sein.

Das weitere Gehäuse 24 umfasst eine weitere Akkupack-Schnittstelle (auch Akkuaufnahme genannt), die kompatibel zur Akkupack-Schnittstelle des Akkupacks 20 ist. Dementsprechend weist die weitere Akkupack-Schnittstelle Halte- und/oder Kontakt- und/oder Rastelemente auf, wie beispielsweise Kontaktklemmen oder dergleichen. Der Akkupack 20 ist somit über eine Akkupack-Schnittstelle an die Akkuaufnahme des weiteren Gehäuses 24 mechanisch koppelbar und bei Bedarf wieder entkoppelbar. Die elektrische Verbindung zwischen der Akkuaufnahme und der Signalerzeugungseinheit 16 erfolgt durch hier nicht dargestellte elektrische Leitungen oder dergleichen.

Dem weiteren Gehäuse 24 kann eine entsprechende Ein-/Aus-Bedieneinheit (hier nicht dargestellt) zugeordnet sein, über welche die Signalerzeugungsvorrichtung 10 aktiviert bzw. deaktiviert werden kann. Insbesondere wird über die Ein-Aus-Bedieneinheit die elektrische Energieversorgung durch das Akkupack 20 gesteuert. Die Ein-Aus-Bedieneinheit kann einen Schalter, Taster, Touchdisplay oder dergleichen aufweisen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Signalerzeugungsvorrichtung
- 12: Gehäuse
- 14: Anschluss
- 16: Signalerzeugungseinheit
- 18: Frequenzgenerator
- 20: Akkupack
- 22: Akkupackgehäuse
- 24: weiteres Gehäuse
- 26: elektrische Leitung
- 28: Begrenzungselement

- A: Bearbeitungsbereich / Mähbereich
- B: Bearbeitungsbereich / Mähbereich
- C: Bearbeitungsbereich / Mähbereich

## Patentansprüche

1. Tragbare und/oder mobile Signalerzeugungsvorrichtung (10) zur Kopplung an ein vorgegebenes Begrenzungselement (28), das einen Bearbeitungsbereich (A, B, C) für einen autonom fahrenden Bodenbearbeitungsroboter definiert, zumindest umfassend
- ein Gehäuse (12) mit zumindest zwei Anschlüssen (14), an welche jeweils ein Ende des vorgegebenen Begrenzungselements (28) koppelbar ist,
- eine im Gehäuse (12) angeordnete Signalerzeugungseinheit (16), welche über die zumindest zwei Anschlüsse (14) elektrisch mit dem vorgegebenen Begrenzungselement (28) koppelbar ist und welche dazu ausgebildet ist, ein elektrisches Signal durch das vorgegebene Begrenzungselement (28) zu senden, und
- wenigstens einen Akkupack (20), welcher die Signalerzeugungseinheit (16) mit elektrischer Energie versorgt, wobei der Akkupack (20) lösbar an die Signalerzeugungsvorrichtung (10) angeschlossen ist, wobei
- der wenigstens eine Akkupack (20) ein Akkupackgehäuse (22) umfasst, innerhalb welchem mehrere Akkuzellen angeordnet sind,
- der Akkupack (20) eine Akkupack-Schnittstelle aufweist,
**dadurch gekennzeichnet, dass**
- die Akkupack-Schnittstelle Steckkontakte oder Rastkontakte aufweist und zum lösbaren mechanischen und elektrischen Koppeln an das Gehäuse (12) der Signalerzeugungsvorrichtung ausgebildet ist, und
- das Gehäuse (12) an einer Außenseite eine Akkuaufnahme-Schnittstelle aufweist, die kompatibel zur Akkupack-Schnittstelle des Akkupacks (20) ausgebildet ist, so dass der Akkupack (20) über seine Akkupack-Schnittstelle an der Akkuaufnahme-Schnittstelle des Gehäuses (12) mechanisch und elektrisch koppelbar ist.

2. Tragbare und/oder mobile Signalerzeugungsvorrichtung nach Anspruch 1, bei welcher die zumindest zwei Anschlüsse (14) des Gehäuses (12) jeweils eine Rast-, Steck- und/oder Pressaufnahme aufweisen.

3. Tragbare und/oder mobile Signalerzeugungsvorrichtung nach einem der vorherigen Ansprüche, welche zumindest ein weiteres Gehäuse (24) umfasst, das mit dem Gehäuse (12) elektrisch verbunden ist.

4. Tragbare und/oder mobile Signalerzeugungsvorrichtung nach Anspruch 3, bei welcher das zumindest eine weitere Gehäuse (24) eine weitere Akkuaufnahme-Schnittstelle aufweist, die kompatibel zur Akkupack-Schnittstelle des Akkupacks (20) ausgebildet ist, so dass der Akkupack (20) über seine Akkupack-Schnittstelle an der weiteren Akkuaufnahme-Schnittstelle des weiteren Gehäuses (12) mechanisch und/oder elektrisch koppelbar ist.

5. Tragbare und/oder mobile Signalerzeugungsvorrichtung nach einem der vorherigen Ansprüche, bei welcher das Gehäuse (12) oder das weitere Gehäuse (24) ein öffenbares Gehäuseelement aufweist, innerhalb welchem die jeweilige Akkuaufnahme-Schnittstelle angeordnet ist.

6. Tragbare und/oder mobile Signalerzeugungsvorrichtung nach einem der vorherigen Ansprüche, bei welcher das elektrische Signal durch ein Pulssignal, durch ein Sinussignal, durch ein Rechtecksignal, durch ein Dreiecksignal, durch ein Sägezahnsignal oder durch ein sonstiges moduliertes Signal gebildet ist.

7. Tragbare und/oder mobile Signalerzeugungsvorrichtung nach einem der vorherigen Ansprüche, bei welcher die Signalerzeugungseinheit (16) einen Frequenzgenerator aufweist, mit dem das elektrische Signal mit einer Frequenz zwischen 1 Hz und 100 Hz, oder zwischen 40 Hz und 90 Hz, erzeugbar ist.

8. Signalerzeugungssystem mit einer tragbaren und/oder mobilen Signalerzeugungsvorrichtung nach einem der vorherigen Ansprüche, an die das vorgegebene Begrenzungselement (28) lösbar gekoppelt ist.

## Claims

1. A portable and/or mobile signal generating device (10) for coupling to a preset limiting element (28), which defines a processing area (A, B, C) for an autonomously driving ground processing robot, at least comprising
- a housing (12) with at least two terminals (14), to which an end of the preset limiting element (28) can respectively be coupled,
- a signal generating unit (16) arranged in the housing (12), which can be electrically coupled to the preset limiting element (28) via the at least two terminals (14) and which is configured to transmit an electrical signal through the preset limiting element (28), and
- at least one battery pack (20), which supplies the signal generating unit (16) with electrical energy, wherein the battery pack (20) is detachably connected to the signal generating device (10), wherein
- the at least one battery pack (20) includes a battery pack housing (22), within which multiple battery cells are arranged,
- the battery pack (20) comprises a battery pack interface,
**characterized in that**
- the battery pack interface comprises plug-in contacts or snap-in contacts and is formed for detachably mechanically and electrically coupling to the housing (12) of the signal generating device, and
- the housing (12) comprises a battery receiving interface on an outer side, which is formed compatibly with the battery pack interface of the battery pack (20), such that the battery pack (20) can be mechanically and electrically coupled to the battery receiving interface of the housing (12) via its battery pack interface.

2. The portable and/or mobile signal generating device according to claim 1, in which the at least two terminals (14) of the housing (12) each comprise a snap-in, plug-in and/or press receptacle.

3. The portable and/or mobile signal generating device according to any one of the preceding claims, which includes at least one further housing (24), which is electrically connected to the housing (12).

4. The portable and/or mobile signal generating device according to claim 3, in which the at least one further housing (24) comprises a further battery receiving interface, which is formed compatibly with the battery pack interface of the battery pack (20) such that the battery pack (20) can be mechanically and/or electrically coupled to the further battery receiving interface of the further housing (12) via its battery pack interface.

5. The portable and/or mobile signal generating device according to any one of the preceding claims, in which the housing (12) or the further housing (24) comprises an openable housing element, within which the respective battery receiving interface is arranged.

6. The portable and/or mobile signal generating device according to any one of the preceding claims, in which the electrical signal is formed by a pulse signal, by a sinusoidal signal, by a square-wave signal, by a triangular signal, by a sawtooth signal or by another modulated signal.

7. The portable and/or mobile signal generating device according to any one of the preceding claims, in which the signal generating unit (16) comprises a frequency generator, by which the electrical signal can be generated with a frequency between 1 Hz and 100 Hz or between 40 Hz and 90 Hz.

8. A signal generating system with a portable and/or mobile signal generating device according to any one of the preceding claims, to which the preset limiting element (28) is detachably coupled.

## Revendications

1. Dispositif de génération de signal (10) portable et/ou mobile destiné à être couplé à un élément de délimitation (28) prédéfini qui définit une zone de traitement (A, B, C) pour un robot de traitement du sol à déplacement autonome, comprenant au moins
- un boîtier (12) pourvu d'au moins deux bornes (14) auxquelles respectivement une extrémité de l'élément de délimitation (28) prédéfini peut être couplée,
- une unité de génération de signal (16) disposée dans le boîtier (12) et qui permet de coupler électriquement les au moins deux bornes (14) à l'élément de délimitation (28) prédéfini et qui est réalisée pour envoyer un signal électrique par l'élément de délimitation (28) prédéfini, et
- au moins un bloc d'accumulateur (20) qui alimente l'unité de génération de signal (16) en énergie électrique, le bloc d'accumulateur (20) étant connecté de manière amovible au dispositif de génération de signal (10), dans lequel
- ledit au moins un bloc d'accumulateur (20) comprend un boîtier de bloc d'accumulateur (22) dans lequel plusieurs cellules d'accumulateur sont disposées,
- le bloc d'accumulateur (20) présente une interface de bloc d'accumulateur,
**caractérisé en ce que**
- l'interface de bloc d'accumulateur présente des contacts enfichables ou des contacts encliquetables et est réalisé pour le couplage mécanique et électrique amovible au boîtier (12) du dispositif de génération de signal, et
- le boîtier (12) présente sur une face extérieure une interface de logement d'accumulateur qui est réalisée de manière compatible avec l'interface de bloc d'accumulateur du bloc d'accumulateur (20) de sorte que le bloc d'accumulateur (20) peut être couplé mécaniquement et électriquement à l'interface de logement d'accumulateur du boîtier (12) par l'intermédiaire de son interface de bloc d'accumulateur.

2. Dispositif de génération de signal portable et/ou mobile selon la revendication 1, dans lequel les au moins deux bornes (14) du boîtier (12) présentent respectivement un logement d'encliquetage, d'enfichage et/ou à pression.

3. Dispositif de génération de signal portable et/ou mobile selon l'une quelconque des revendications précédentes, qui comprend au moins un boîtier supplémentaire (24) qui est relié électriquement au boîtier (12).

4. Dispositif de génération de signal portable et/ou mobile selon la revendication 3, dans lequel ledit au moins un boîtier supplémentaire (24) présente une interface de logement d'accumulateur supplémentaire qui est réalisée de manière compatible avec l'interface de bloc d'accumulateur du bloc d'accumulateur (20) de sorte que le bloc d'accumulateur (20) peut être couplé mécaniquement et/ou électriquement à l'interface de logement d'accumulateur supplémentaire du boîtier supplémentaire (12) par l'intermédiaire de son interface de bloc d'accumulateur.

5. Dispositif de génération de signal portable et/ou mobile selon l'une quelconque des revendications précédentes, dans lequel le boîtier (12) ou le boîtier supplémentaire (24) présente un élément de boîtier pouvant être ouvert dans lequel est disposée l'interface de logement d'accumulateur respective.

6. Dispositif de génération de signal portable et/ou mobile selon l'une quelconque des revendications précédentes, dans lequel le signal électrique est formé par un signal d'impulsion, par un signal sinusoïdal, par un signal rectangulaire, par un signal triangulaire, par un signal en dents de scie ou par un autre signal modulé.

7. Dispositif de génération de signal portable et/ou mobile selon l'une quelconque des revendications précédentes, dans lequel l'unité de génération de signal (16) présente un générateur de fréquence qui permet de générer le signal électrique à une fréquence comprise entre 1 Hz et 100 Hz, ou entre 40 Hz et 90 Hz.

8. Système de génération de signal, comprenant un dispositif de génération de signal portable et/ou mobile selon l'une quelconque des revendications précédentes, auquel l'élément de délimitation (28) prédéfini est couplé de manière amovible.
